(19)

**Europäisches Patentamt**
**European Patent Office**
**Office européen des brevets**

(11) **EP 4 438 967 B1**

(12) **EUROPEAN PATENT SPECIFICATION**

(45) Date of publication and mention
of the grant of the patent:
**17.12.2025 Bulletin 2025/51**

(51) International Patent Classification (IPC):
***F24F 11/64*** *(2018.01)*     ***F24F 11/74*** *(2018.01)*
***F24F 11/77*** *(2018.01)*

(21) Application number: **24167090.0**

(22) Date of filing: **27.03.2024**

(52) Cooperative Patent Classification (CPC):
**F24F 11/74; F24F 11/64; F24F 11/77;** F24F 11/46;
Y02B 30/70

(54) **AIR VOLUME CORRECTION CONTROL METHOD AND DEVICE FOR AIR CONDITIONER INDOOR UNIT AND MULTI-SPLIT AIR CONDITIONING UNIT**

VERFAHREN UND VORRICHTUNG ZUR STEUERUNG DER LUFTMENGENKORREKTUR FÜR EINE KLIMAANLAGENINNENRAUMEINHEIT UND MULTISPLIT-KLIMAANLAGENEINHEIT

PROCÉDÉ ET DISPOSITIF DE COMMANDE DE CORRECTION DE VOLUME D'AIR POUR UNITÉ INTÉRIEURE DE CLIMATISEUR ET UNITÉ DE CLIMATISATION À DIVISIONS MULTIPLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2023 CN 202310347688**

(43) Date of publication of application:
**02.10.2024 Bulletin 2024/40**

(73) Proprietor: **Guangdong Carrier Heating, Ventilation And Air Conditioning Co., Ltd.**
**Foshan Guangdong 528244 (CN)**

(72) Inventors:
• **XIAO, Junzhao**
**Foshan, 528244 (CN)**
• **FANG, Ting**
**Foshan, 528244 (CN)**

(74) Representative: **Dehns**
**10 Old Bailey**
**London EC4M 7NG (GB)**

(56) References cited:
CN-A- 102 748 843    CN-A- 104 764 160
CN-A- 106 152 392    CN-A- 113 108 443
US-A1- 2013 288 589

## Description

## Technical Field

The present invention relates to the field of air conditioners, and specifically relates to an air volume correction control method and device for an air conditioner indoor unit and a multi-split air conditioning unit.

## Background

With the development of economy and society, the requirements for carbon dioxide emissions are becoming more and more stringent. Statistics show that the total amount of energy consumption in buildings is increasing year by year, and its proportion in total energy consumption has increased from 10% in the late 1970s to 27.8% in recent years. In energy consumption in buildings, heating and air conditioning consume the most energy. China's energy consumption in heating and air conditioning accounts for 55% of the total energy consumption in buildings. The energy saving of air conditioning systems is of great significance in improving the effectiveness of reducing the total energy consumption in buildings.

The existing air volume correction control for the indoor unit fan of a multi-split machine uses a dial to select a preset rotation speed to achieve air volume correction. However, the number of dials limits the number of preset rotation speeds, and in actual engineering installation, due to the influences from the shape and length of the air return box and the air supply box, dirt and blockage of the filter, and the like, the static pressure of the air duct is not constant, and the air volume cannot be corrected accurately based on the static pressure of the air duct, which affects the use effect.

The prior art (CN113108443A) discloses a method for controlling the constant air volume of a fan coil, which includes pre-testing the corresponding preset rotation speed and preset output power of the fan coil in different static pressure intervals; testing the corrected rotation speeds of the fan coil with respect to the standard temperature value and the standard humidity value in different conditions of the first temperature value and the first humidity value; when the fan coil is operating, first operating at a preset rotation speed F10 at a static pressure of 100Pa with an actual power SW10 at this time; identifying the final rotation speed based on the comparison between the actual power SW and the pre-tested preset power W; if the actual power SW10 meets a first condition, determining F10 as the final rotation speed automatically identified; if the actual power SW10 meets a second condition, operating at a preset rotation speed F 11 at a static pressure of 110Pa with an actual power SW11 at this time; and if the actual power SW10 meets a third condition, operating at a preset rotation speed F9 at a static pressure of 90Pa with an actual power SW9 at this time. Although this technical solution also relates to the correction of rotation speed of the fan, it is necessary to keep the air volume constant and to make multiple times of determination and debugging, which is time-consuming and has low operating efficiency.

## Summary of the Invention

In view of the problems mentioned above, at least a preferred embodiment of the present invention provides an air volume correction control method and device for an air conditioner indoor unit and a multi-split air conditioning unit with a simple method and high operating efficiency, which can timely and accurately correct the final static pressure of the air duct influenced by the shape and length of the air return box and the air supply box, the dirt and blockage of the filter, and the like to adjust the rotation speed of the fan, thereby improving the use effect for the user, avoiding energy waste, and achieving the purpose of energy saving. Even when the air volume is not constant, the static pressure data can be obtained by acquiring the minimum power deviation between the actual power and the sampled power, which reduces the difficulty of acquisition of the static pressure data and improves the precision of acquisition of the static pressure data.

According to a first aspect of the invention there is provided an air volume correction control method for an air conditioner indoor unit, including the following steps:

a presetting step: presetting a corresponding rotation speed of the air conditioner indoor unit when operating at a constant air volume and in different static pressure intervals respectively, and recording it as a preset rotation speed $F_x$;

a sampled power data set $W_s$ acquisition step: setting a sampled rotation speed $F_s$, collecting corresponding sampled powers of the air conditioner indoor unit when operating in the different static pressure intervals respectively at the sampled rotation speed $F_s$ and in the condition of the constant air volume, and recording them as the sampled power data set $W_s$;

an actual power acquisition step: operating the air conditioner indoor unit at the sampled rotation speed $F_s$, and collecting in real time an actual power $W_s'$ of the air conditioner indoor unit when operating at the sampled rotation speed $F_s$;

a computation step: calculating a power deviation rate $e$ of the air conditioner indoor unit based on the sampled power data set $W_s$ acquired in the sampled power data set $W_s$ acquisition step and the actual power $W_s'$ acquired in the actual power acquisition step; where,

$$e = \frac{Ws - Ws'}{Ws} * 100\%$$

a comparison step: acquiring a minimum power deviation rate $e_{min}$ through comparison based on the computation result of the computation step; and

a rotation speed determination step: determining an actual static pressure value of the air conditioner indoor unit in the actual power acquisition step based on the minimum power deviation rate $e_{min}$ and the sampled power corresponding thereto, and based on the correspondence between the different static pressure intervals and the preset rotation speed $F_x$ in the presetting step, determining the preset rotation speed $F_x$ corresponding to the actual static pressure value as the final identified rotation speed of the air conditioner indoor unit.

In the control method of the present invention, the sampled power closest to the actual power is acquired by calculating the minimum power deviation rate, and the actual static pressure is acquired based on the correspondence between the sampled power and the corresponding static pressure. The actual static pressure value is actually the actual static pressure acquired in consideration of influences from comprehensive factors such as the shape and length of the air return box and the air supply box, dirt and blockage of the filter, the temperature and humidity, and the like, so that the accuracy of the actual static pressure data is improved and the difficulty of acquisition of the actual static pressure is reduced, and the drawback in the prior art of incapability or inconvenience of static pressure data measurement by the air conditioning unit itself is also overcome, thereby saving costs. Further, in the control method of the present invention, the final identified rotation speed can be determined through computation and comparison steps after collecting the actual power without multiple times of determination and debugging, thereby reducing the complexity of computation and increasing the speed of computation, and the rotation speed of the air conditioner indoor unit can be corrected timely based on the actual power, thereby improving the timeliness and precision of rotation speed adjustment. In addition, in the actual operation steps, the final identified rotation speed can be obtained based on the measured actual power without keeping the air volume constant, which overcomes the influence of inconstant air volume on the correction control method. The air volume correction control method for an air conditioner indoor unit of at least a preferred embodiment of the present invention has the advantages of simplicity, wide application range, and fast computation speed. It may improve the timeliness of air volume correction for a multi-split indoor unit to allow the multi-split machine to operate at the correct rotation speed, which is favorable for saving of energy consumption and improves the cooling or heating effect and hence may improve the user experience.

Optionally, the method includes, before the presetting step, a preset rotation speed acquisition step: measuring the corresponding rotation speeds of the air conditioner indoor unit when operating in the condition of a constant air volume and in different static pressure intervals respectively; where in the presetting step, the preset rotation speed $F_x$ is set based on the acquisition result of the preset rotation speed acquisition step.

According to this technical solution, the corresponding rotation speeds during operation in different static pressure intervals are acquired at a constant air volume, which may be favorable for improving the accuracy of the preset rotation speed.

Optionally, in the preset rotation speed acquisition step, the static pressure data is measured and acquired by using a static pressure meter.

According to this technical solution, the static pressure data of the air conditioner indoor unit is acquired by using the static pressure meter, which may be simple and fast and reduce the difficulty of the correction control method.

Optionally, the actual power acquisition step is performed after the air conditioner indoor unit enters the automatic identification function.

According to this technical solution, the actual power acquisition step is performed after the air conditioner indoor unit enters the automatic identification function, which may be favorable for improving the accuracy of the actual power data.

Optionally, in the computation step, each sampled power in the sampled power data set $W_s$ is compared with the actual power respectively to calculate the power deviation rate $e$.

According to this technical solution, in the condition that the actual static pressure is unknown, the minimum power deviation rate is acquired by calculating the power deviation rate between the sampled powers corresponding to different static pressures respectively and the actual power, and the sampled power closest to the actual power in the sampled power data set and the static pressure corresponding to this sampled power can be acquired, this static pressure being the actual static pressure, which may improve the precision of static pressure data acquisition and consequently may be favorable for improving the precision of air volume correction.

Optionally, in the presetting step, the numerical range of the different static pressure intervals is 0-200Pa.

According to this technical solution, by selecting an appropriate static pressure interval, both the breadth of air volume correction and the computation amount in the air volume correction method can be taken into account, and the efficiency of the air volume correction method may be improved.

Optionally, in the presetting step, the number of the preset rotation speeds is no less than 10.

According to this technical solution, dividing the static pressure interval into smaller intervals can increase the number of preset rotation speeds accordingly, so that different static pressure data have corresponding preset rotation speeds, which may be favorable for improving the precision in rotation speed adjustment and the precision in air volume correction for the indoor unit, avoiding unnecessary energy consumption, and improving the energy saving performance of air conditioners.

Optionally, the sampled rotation speed $F_s$ is different from the preset rotation speed.

According to this technical solution, in consideration of the influence from comprehensive factors such as the shape and length of the air return box and the air supply box, the dirt and blockage of the filter, the temperature and humidity, and the like, an appropriate sampled rotation speed is selected for operation, which may help to narrow the gap between the actual power and the sampled power, so that the minimum power deviation rate may be lower, thereby improving the accuracy of the actual static pressure data and consequently matching the accurate preset rotation speed, and improving the accuracy of the air volume correction for the multi-split indoor unit.

According to a second aspect of the invention there is provided an air volume correction control device for an air conditioner indoor unit, including:

a presetting module configured to preset a corresponding rotation speed of the air conditioner indoor unit when operating at a constant air volume and in different static pressure intervals respectively, and record it as a preset rotation speed $F_x$;

a sampled power data set $W_s$ acquisition module configured to set a sampled rotation speed $F_s$, collect corresponding sampled powers of the air conditioner indoor unit when operating in the different static pressure intervals respectively at the sampled rotation speed $F_s$ and in the condition of the constant air volume, and record them as the sampled power data set $W_s$;

an actual power acquisition module configured to operate the air conditioner indoor unit at the sampled rotation speed $F_s$, and collect in real time an actual power $W_s'$ of the air conditioner indoor unit when operating at the sampled rotation speed $F_s$;

a computation module communicatively connected with the sampled power data set $W_s$ acquisition module and the actual power acquisition module and configured to calculate a power deviation rate $e$ of the air conditioner indoor unit based on the sampled power data set $W_s$ acquired by the sampled power data set $W_s$ acquisition module and the actual power $W_s'$ acquired by the actual power acquisition module; where,

$$e = \frac{Ws - Ws'}{Ws} * 100\%$$

a comparison module communicatively connected with the computation module and configured to acquire a minimum power deviation rate $e_{min}$ through comparison based on the computation result of the computation module; and

a rotation speed determination module communicatively connected with the presetting module and the comparison module and configured to determine an actual static pressure value of the air conditioner indoor unit in the actual power acquisition module based on the minimum power deviation rate $e_{min}$ and the sampled power corresponding thereto, and based on the correspondence between the different static pressure intervals and the preset rotation speed $F_x$ in the presetting module, determine the preset rotation speed $F_x$ corresponding to the actual static pressure value as the final identified rotation speed of the air conditioner indoor unit.

According to a third aspect of the invention there is provided a multi-split air conditioning unit including the air volume correction control device for an air conditioner indoor unit described above.

There may also be provided a computer-readable storage medium having a computer program stored therein. The computer program, when executed by a processor, implements the steps of the air volume correction control method for an air conditioner indoor unit described above.

With the air volume correction control method for an air conditioner indoor unit, the present invention at least in preferred embodiments can timely and accurately correct the final static pressure of the air duct influenced by the shape and length of the air return box and the air supply box, the dirt and blockage of the filter, and the like to adjust the rotation speed of the fan, thereby improving the use effect for the user, avoiding energy waste, and achieving the purpose of energy saving.

**Brief Description of the Drawings**

Certain exemplary embodiments will now be described in greater detail by way of example only and with reference to the accompanying drawings in which:

Fig. 1 is a schematic flowchart of an air volume correction control method for an air conditioner indoor unit;
Fig. 2 is a schematic modular structural diagram of an air volume correction control device for an air conditioner indoor unit; and
Fig. 3 is a schematic structural diagram of a multi-split air conditioning unit.

Reference numerals:

Presetting module 1; sampled power data set $W_s$ acquisition module 2; actual power acquisition module 3; computation module 4; comparison module 5; rotation speed determination module 6; preset rotation speed acquisition module 7; compressor 81; four-way valve 82; throttle valve 83; outdoor heat exchanger 84; outdoor fan 841; indoor unit 85; gas-liquid separator 86; oil separator 87; oil return capillary 88.

**Detailed Description**

The technical solutions in the embodiments of the present invention will be clearly and completely described below with reference to the accompanying drawings in the embodiments of the present invention. Obviously, the described embodiments are only some of the embodiments rather than all the embodiments of the present invention. Based on the embodiments of the present invention, all other embodiments obtained by those of ordinary skill in the art without creative efforts shall fall within the scope of protection of the present invention, which is as set out in the appended claims.

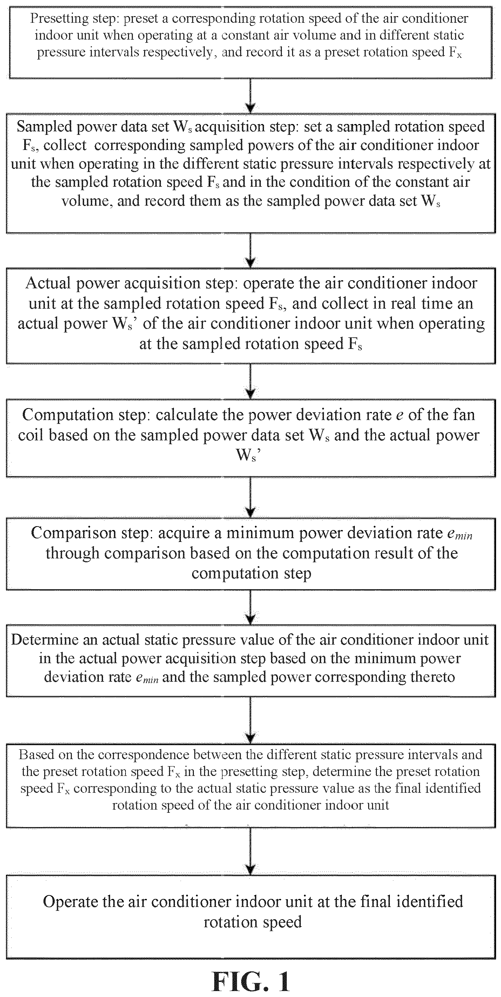

Referring to Fig. 1, this implementation provides an air volume correction control method for an air conditioner indoor unit, including the following steps:

a presetting step: presetting a corresponding rotation speed of the air conditioner indoor unit when operating at a constant air volume and in different static pressure intervals respectively, and recording it as a preset rotation speed $F_x$;

a sampled power data set $W_s$ acquisition step: setting a sampled rotation speed $F_s$, collecting corresponding sampled powers of the air conditioner indoor unit when operating in the different static pressure intervals respectively at the sampled rotation speed $F_s$ and in the condition of the constant air volume, and recording them as the sampled power data set $W_s$;

an actual power acquisition step: operating the air conditioner indoor unit at the sampled rotation speed $F_s$, and collecting in real time an actual power $W_s'$ of the air conditioner indoor unit when operating at the sampled rotation speed $F_s$;

a computation step: calculating a power deviation rate $e$ of the air conditioner indoor unit based on the sampled power data set $W_s$ acquired in the sampled power data set $W_s$ acquisition step and the actual power $W_s'$ acquired in the actual power acquisition step; where,

$$ e = \frac{Ws - Ws'}{Ws} * 100\% $$

a comparison step: acquiring a minimum power deviation rate $e_{min}$ through comparison based on the computation result of the computation step; and
a rotation speed determination step: determining an actual static pressure value of the air conditioner indoor unit in the actual power acquisition step based on the minimum power deviation rate $e_{min}$ and the sampled power corresponding thereto, and based on the correspondence between the different static pressure intervals and the preset rotation speed $F_x$ in the presetting step, determining the preset rotation speed $F_x$ corresponding to the actual static pressure value as the final identified rotation speed of the air conditioner indoor unit.

In the control method of this implementation, the sampled power closest to the actual power is acquired by calculating the minimum power deviation rate, and the actual static pressure is acquired based on the correspondence between the sampled power and the corresponding static pressure. The actual static pressure value is actually the actual static pressure acquired in consideration of influences from comprehensive factors such as the shape and length of the air return box and the air supply box, the dirt and blockage of the filter, the temperature and humidity, and the like, so that the accuracy of the actual static pressure data is improved and the difficulty of acquisition of the actual static pressure is reduced, and the drawback in the prior art of incapability or inconvenience of static pressure data measurement by the air conditioning unit itself is also overcome, thereby saving costs. Further, in the control method of this implementation, the final identified rotation speed can be determined through computation and comparison steps after collecting the actual power without multiple times of determination, thereby reducing the complexity of computation and increasing the speed of computation, and the rotation speed of the air conditioner indoor unit can be corrected timely based on the actual power, thereby improving the timeliness and accuracy of rotation speed adjustment. In addition, in the actual operation steps, the final identified rotation speed can be obtained based on the measured actual power without keeping the air volume constant, which overcomes the influence of inconstant air volume on the correction control method. The air volume correction control method for an air conditioner indoor unit of this implementation has the advantages of simplicity, wide application range, and fast computation speed. It improves the timeliness of air volume correction for a multi-split indoor unit to allow the multi-split machine to operate at the correct rotation speed, which is favorable for saving of energy consumption and improves the cooling or heating effect and hence improves the user experience.

In a preferred implementation of the present invention, the method further includes, before the presetting step, a preset rotation speed acquisition step: measuring a corresponding rotation speed of the air conditioner indoor unit when operating in the condition of a constant air volume and in different static pressure intervals respectively; where in the presetting step, the preset rotation speed $F_x$ is set based on the acquisition result of the preset rotation speed acquisition step.

In this way, the corresponding rotation speeds during operation in different static pressure intervals are acquired at a constant air volume, which is favorable for improving the accuracy of the preset rotation speed.

In a preferred implementation of the present invention, in the preset rotation speed acquisition step, the static pressure data is measured and acquired by using a static pressure meter. In laboratory test conditions, the static pressure data of the air conditioner indoor unit is acquired by using the static pressure meter, which is simple and fast and reduces the difficulty of the correction control method.

In a preferred implementation of the present invention, the actual power acquisition step is performed after the air conditioner indoor unit enters the automatic identification function. In this way, the actual power acquisition step is performed after the air conditioner indoor unit enters the automatic identification function, which is favorable for improving the accuracy of the actual power data. The automatic identification function is an inherent program of the air conditioner that can identify various parameters during the operation of the air conditioner, such as the rotation speed, power, and the like, which will not be described in detail here.

In a preferred implementation of the present invention, in the computation step, each sampled power in the sampled power data set $W_s$ is compared with the actual power respectively to calculate the power deviation rate $e$.

In this way, in the condition that the actual static pressure is unknown, the minimum power deviation rate is acquired by calculating the power deviation rate between the sampled powers corresponding to different static pressures respectively and the actual power, and the sampled power closest to the actual power and the static pressure corresponding to this sampled power can be acquired, this static pressure being the actual static pressure, which improves the precision of static pressure data acquisition and consequently is favorable for improving the precision of air volume correction.

In a preferred implementation of the present invention, the air conditioner indoor unit is a duct type air conditioner indoor unit. Duct type air conditioners have the advantages of aesthetic appearance and low cost.

In a preferred implementation of the present invention, in the presetting step, the numerical range of the different static pressure intervals is 0-200Pa. By selecting an appropriate static pressure interval, both the breadth of air volume correction and the computation amount in the air volume correction method can be taken into account, and the efficiency of the air volume correction method can be improved. In other approaches, 0-300Pa and 50-300Pa can also be selected, which is not limited to the examples given in the implementations of the present invention.

In a preferred implementation of the present invention, in the presetting step, the number of the preset rotation speeds is no less than 10. Dividing the static pressure interval into smaller intervals can increase the number of preset rotation speeds accordingly, so that different static pressure data have corresponding preset rotation speeds, which is favorable for improving the precision in rotation speed adjustment and the precision in air volume correction for the indoor unit, avoiding unnecessary energy consumption, and improving the energy saving performance of air conditioners. Preferably, the number of preset rotation speeds is 21, and the static pressure values are divided in units of 10, including 0, 10, 20, 30, 40, 50...180, 190, and 200 Pa. Further, in order to improve the precision, the static pressure values can be divided in finer granularity, for example, in units of 5, that is, 0, 5, 10, 15, 20...190, 195, and 200Pa.

In a preferred implementation of the present invention, the method further includes operating the air conditioner indoor unit at the final identified rotation speed after determining the final identified rotation speed.

The air volume correction control method for an air conditioner indoor unit according to this implementation has been described above, and will be described below with a specific embodiment.

Specifically, in laboratory conditions, the rotation speed ($F_0$, $F_1$, $F_2$, $F_3$...$F_{20}$) corresponding to the constant air volume at the static pressure of 0Pa to 200Pa is tested and recorded as the preset rotation speed $F_x$;

the machine is operated at the sampled rotation speed $F_s$, and the corresponding power $W_{si}$ ($i$=0-20, specifically, $W_{s0}$, $W_{s1}$, $W_{s2}$, $W_{s3}$...$Ws_{20}$) corresponding to the static pressure from 0Pa to 200Pa (specifically, 0, 10, 20, 30, 40, 50...180, 190, 200 Pa) is collected, where the power corresponding to 0Pa is $W_{s0}$, the power corresponding to 10Pa is $W_{s1}$, the power corresponding to 20Pa is $W_{s2}$...and so on;

at the engineering installation site, after the air conditioner indoor unit enters the automatic identification function, the power $W_s'$ during operation at the sampled rotation speed $F_s$ is collected;

the corresponding power deviation rates $e_j$ ($j$=0-20, specifically, $e_0$, $e_1$, $e_2$, $e_3$...$e_{20}$) at different static pressures are calculated respectively according to the following formula;

$$e_j = \frac{Wsi - Ws'}{Wsi} * 100\%$$

the minimum power deviation rate $e_{min}$ (the minimum in $e_{min} = (e_0, e_1, e_2, e_3...e_{20})$) and the actual static pressure corresponding thereto xxPa are acquired through comparison, and then based on the correspondence between the static pressure and the preset rotation speed, the preset rotation speed $F_{xx}$ corresponding to the actual static pressure is obtained as the final rotation speed that is automatically identified. For example, the minimum power

deviation rate is $e_{min} = e_8$, then the master control identifies the corresponding actual static pressure to be 80Pa, and then in the presetting step, the preset rotation speed $F_8$ is fetched accordingly as the final rotation speed that is automatically identified.

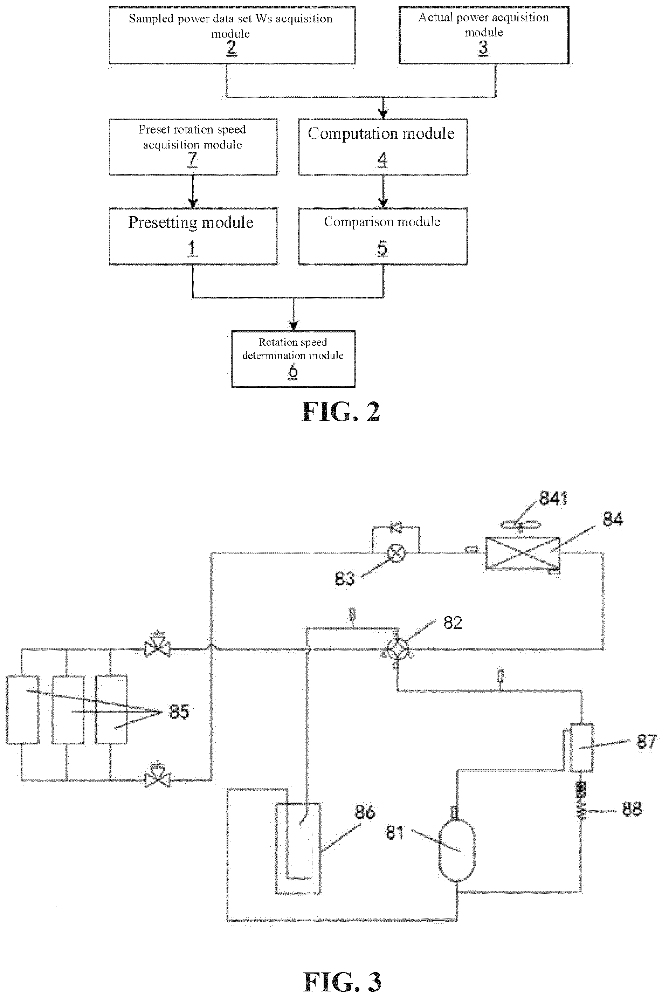

Referring to Fig. 2, this implementation further provides an air volume correction control device for an air conditioner indoor unit, including:

a presetting module 1 configured to preset a corresponding rotation speed of the air conditioner indoor unit when operating at a constant air volume and in different static pressure intervals respectively, and record it as a preset rotation speed $F_x$;
a sampled power data set $W_s$ acquisition module 2 configured to set a sampled rotation speed $F_s$, collect corresponding sampled powers of the air conditioner indoor unit when operating in the different static pressure intervals respectively at the sampled rotation speed $F_s$ and in the condition of the constant air volume, and record them as the sampled power data set $W_s$;
an actual power acquisition module 3 configured to operate the air conditioner indoor unit at the sampled rotation speed $F_s$, and collect in real time an actual power $W_s'$ of the air conditioner indoor unit when operating at the sampled rotation speed $F_s$;
a computation module 4 communicatively connected with the sampled power data set $W_s$ acquisition module 2 and the actual power acquisition module 3 and configured to calculate a power deviation rate $e$ of the air conditioner indoor unit based on the sampled power data set $W_s$ acquired by the sampled power data set $W_s$ acquisition module 2 and the actual power $W_s'$ acquired by the actual power acquisition module 3; where,

$$e = \frac{Ws - Ws'}{Ws} * 100\%$$

a comparison module 5 communicatively connected with the computation module 4 and configured to acquire a minimum power deviation rate $e_{min}$ through comparison based on the computation result of the computation module 4; and
a rotation speed determination module 6 communicatively connected with the presetting module 1 and the comparison module 5 and configured to determine an actual static pressure value of the air conditioner indoor unit in the actual power acquisition module based on the minimum power deviation rate $e_{min}$ and the sampled power corresponding thereto, and based on the correspondence between the different static pressure intervals and the preset rotation speed $F_x$ in the presetting module 1, determine the preset rotation speed $F_x$ corresponding to the

actual static pressure value as the final identified rotation speed of the air conditioner indoor unit.

In a preferred implementation of the present invention, the air volume correction control device for an air conditioner indoor unit further includes a control module (not shown in the figure). The control module controls the operation of the air conditioner indoor unit based on the final identified rotation speed. Specifically, the preset module 1, the actual power acquisition module 3, the computation module 4, the comparison module 5 and the rotation speed determination module 6 can be partially or fully integrated into the control module, which is preferably the master control board of the air conditioner.

In a preferred implementation of the present invention, the device further includes a preset rotation speed acquisition module 7 configured to measure the corresponding rotation speeds of the air conditioner indoor unit when operating in the condition of a constant air volume and in different static pressure intervals respectively, so that the presetting module 1 sets the preset rotation speed $F_x$ based on the acquisition result of the preset rotation speed acquisition module 7. The preset rotation speed acquisition module 7 can be integrated into the control module, that is, identify the corresponding rotation speeds of the air conditioner indoor unit when operating in the condition of the constant air volume and in different static pressure intervals respectively through the master control board. In other implementations, the static pressure and the corresponding rotation speed can also be manually recorded. The static pressure value is acquired through a static pressure meter in test conditions, which is a simple acquisition approach. The rotation speed is read through the master control board.

In a preferred implementation of the present invention, the preset rotation speed acquisition module 7 includes a static pressure meter with which the static pressure data is measured and acquired. In laboratory test conditions, the static pressure data of the air conditioner indoor unit is acquired by using a static pressure meter, which is simple and fast and reduces the difficulty of the correction control method.

In a preferred implementation of the present invention, the actual power acquisition module 3 acquires the actual power after the air conditioner indoor unit enters the automatic identification function. In this way, the actual power acquisition step is performed after the air conditioner indoor unit enters the automatic identification function, which is favorable for improving the accuracy of the actual power data. The automatic identification function is an inherent program of the air conditioner that can identify various parameters during the operation of the air conditioner, such as the rotation speed, power, and the like, which will not be described in detail here.

In a preferred implementation of the present invention, the computation module 4 compares each sampled power in the sampled power data set $W_s$ with

the actual power respectively to calculate the power deviation rate e. In the condition that the actual static pressure is unknown, the minimum power deviation rate is acquired by calculating the power deviation rate between the sampled powers corresponding to different static pressures respectively and the actual power, and the sampled power closest to the actual power and the static pressure corresponding to this sampled power can be acquired, this static pressure being the actual static pressure, which improves the precision of static pressure data acquisition and consequently is favorable for improving the precision of the air volume correction.

Further, as shown in Fig. 3, this implementation further provides a multi-split air conditioning unit including the air volume correction control device for an air conditioner indoor unit described above. In addition, the multi-split air conditioning unit includes a compressor 81, a four-way valve 82, a throttle valve 83, an outdoor heat exchanger 84, multiple indoor units 85 arranged in parallel, an outdoor fan 841, a gas-liquid separator 86, and the like. Each indoor unit 85 is provided with a corresponding indoor fan (not shown in the figure). Further, an oil separator 87 is also provided between the compressor 81 and the four-way valve 82. An oil return capillary 88 is further provided between the outlet of the oil separator 87 and an air return port of the compressor 81. A heat-exchanger outlet temperature sensing package T3 is provided at the outlet of the outdoor heat exchanger 84, a high pressure sensor is provided between the four-way valve 82 and the oil separator 87, a low pressure sensor is provided between the four-way valve 82 and the gas-liquid separator 86, a low pressure stop valve is provided between the outlet of the four-way valve 82 and the inlet of the indoor unit 85, a high pressure stop valve is provided between the outlet of the indoor unit 85 and the throttle valve 83, one check valve is connected in parallel with each side of the throttle valve 83, and an ambient temperature sensing package is also included. It should be noted that the air volume correction control device or control method for an air conditioner indoor unit of this implementation is not only applicable to the multi-split air conditioning unit shown in Fig. 3, but is also applicable to other forms of air conditioners, specific examples of which are not given here.

The air volume correction control device for an air conditioner indoor unit of this implementation can timely and accurately correct the final static pressure of the air duct influenced by the shape and length of the air return box and the air supply box, the dirt and blockage of the filter, and the like to adjust the rotation speed of the indoor unit fan, thereby improving the use effect for the user, avoiding energy waste, and achieving the purpose of energy saving.

This implementation further provides a computer-readable storage medium having a computer program stored therein. The computer program, when executed by a processor, implements the steps of the air volume correction control method for an air conditioner indoor unit described above.

Described above are merely preferred embodiments of the present invention, which are not intended to limit the present invention. Any modifications, equivalent substitutions and improvements made within the principle of the present invention shall fall within the scope of protection of the present invention as set out in the appended claims.

**Claims**

1. An air volume correction control method for an air conditioner indoor unit, comprising the following steps:

   a presetting step: presetting a corresponding rotation speed of the air conditioner indoor unit when operating at a constant air volume and in different static pressure intervals respectively, and recording it as a preset rotation speed $F_x$;
   a sampled power data set $W_s$ acquisition step: setting a sampled rotation speed $F_s$, collecting corresponding sampled powers of the air conditioner indoor unit when operating in the different static pressure intervals respectively at the sampled rotation speed $F_s$ and in the condition of the constant air volume, and recording them as the sampled power data set $W_s$;
   an actual power acquisition step: operating the air conditioner indoor unit at the sampled rotation speed $F_s$, and collecting in real time an actual power $W_s'$ of the air conditioner indoor unit when operating at the sampled rotation speed $F_s$;
   a computation step: calculating a power deviation rate e of the air conditioner indoor unit based on the sampled power data set $W_s$ acquired in the sampled power data set $W_s$ acquisition step and the actual power $W_s'$ acquired in the actual power acquisition step; where,

   $$e = \frac{Ws - Ws'}{Ws} * 100\%$$

   a comparison step: acquiring a minimum power deviation rate $e_{min}$ through comparison based on the computation result of the computation step; and
   a rotation speed determination step: determining an actual static pressure value of the air conditioner indoor unit in the actual power acquisition step based on the minimum power deviation rate $e_{min}$ and the sampled power corresponding thereto, and based on the correspondence between the different static pressure intervals and the preset rotation speed $F_x$ in the

presetting step, determining the preset rotation speed $F_x$ corresponding to the actual static pressure value as the final identified rotation speed of the air conditioner indoor unit.

2. The air volume correction control method for an air conditioner indoor unit according to claim 1, further comprising, before the presetting step, a preset rotation speed acquisition step: measuring the corresponding rotation speeds of the air conditioner indoor unit when operating in the condition of the constant air volume and in different static pressure intervals respectively; where in the presetting step, the preset rotation speed $F_x$ is set based on the acquisition result of the preset rotation speed acquisition step.

3. The air volume correction control method for an air conditioner indoor unit according to claim 2, wherein, in the preset rotation speed acquisition step, static pressure data is measured and acquired by using a static pressure meter.

4. The air volume correction control method for an air conditioner indoor unit according to any preceding claim, wherein the actual power acquisition step is performed after the air conditioner indoor unit enters an automatic identification function.

5. The air volume correction control method for an air conditioner indoor unit according to any preceding claim, wherein, in the computation step, each sampled power in the sampled power data set $W_s$ is compared with the actual power respectively to calculate the power deviation rate $e$.

6. The air volume correction control method for an air conditioner indoor unit according to any preceding claim, wherein, in the presetting step, the numerical range of the different static pressure intervals is 0-200Pa.

7. The air volume correction control method for an air conditioner indoor unit according to any preceding claim, wherein, in the presetting step, the number of the preset rotation speeds is no less than 10.

8. The air volume correction control method for an air conditioner indoor unit according to any preceding claim, wherein the sampled rotation speed Fs is different from the preset rotation speed.

9. An air volume correction control device for an air conditioner indoor unit, comprising:

a presetting module (1) configured to preset a corresponding rotation speed of the air conditioner indoor unit when operating at a constant air volume and in different static pressure intervals respectively, and record it as a preset rotation speed $F_x$;

a sampled power data set $W_s$ acquisition module (2) configured to set a sampled rotation speed $F_s$, collect corresponding sampled powers of the air conditioner indoor unit when operating in the different static pressure intervals respectively at the sampled rotation speed $F_s$ and in the condition of the constant air volume, and record them as the sampled power data set $W_s$;

an actual power acquisition module (3) configured to operate the air conditioner indoor unit at the sampled rotation speed $F_s$, and collect an actual power $W_s'$ of the air conditioner indoor unit when operating at the sampled rotation speed $F_s$;

a computation module (4) communicatively connected with the sampled power data set $W_s$ acquisition module and the actual power acquisition module and configured to calculate a power deviation rate $e$ of the air conditioner indoor unit based on the sampled power data set $W_s$ acquired by the sampled power data set $W_s$ acquisition module and the actual power $W_s'$ acquired by the actual power acquisition module; where,

$$e = \frac{Ws - Ws'}{Ws} * 100\%$$

a comparison module (5) communicatively connected with the computation module and configured to acquire a minimum power deviation rate $e_{min}$ through comparison based on the computation result of the computation module; and a rotation speed determination module (6) communicatively connected with the presetting module and the comparison module and configured to determine an actual static pressure value of the air conditioner indoor unit in the actual power acquisition module based on the minimum power deviation rate $e_{min}$ and the sampled power corresponding thereto, and based on the correspondence between the different static pressure intervals and the preset rotation speed $F_x$ in the presetting module, determine the preset rotation speed $F_x$ corresponding to the actual static pressure value as the final identified rotation speed of the air conditioner indoor unit.

10. A multi-split air conditioning unit, comprising the air volume correction control device for an air conditioner indoor unit according to claim 9.

**Patentansprüche**

1. Verfahren zur Steuerung der Luftmengenkorrektur für eine Klimaanlageninnenraumeinheit, umfassend die folgenden Schritte:

   einen Voreinstellungsschritt: Voreinstellen einer entsprechenden Drehzahl der Klimaanlageninnenraumeinheit, wenn sie mit einem konstanten Luftvolumen und jeweils in verschiedenen statischen Druckintervallen betrieben wird, und Aufzeichnen dieser als eine voreingestellte Drehzahl $F_x$;
   einen Schritt zur Erfassung eines abgetasteten Leistungsdatensatzes $W_s$: Einstellen einer abgetasteten Drehzahl $F_s$, Sammeln entsprechender abgetasteter Leistungen der Klimaanlageninnenraumeinheit, wenn sie in den verschiedenen statischen Druckintervallen jeweils mit der abgetasteten Drehzahl $F_s$ und unter der Bedingung des konstanten Luftvolumens betrieben wird, und Aufzeichnen dieser als den abgetasteten Leistungsdatensatz $W_s$;
   einen Schritt zur Erfassung einer tatsächlichen Leistung: Betreiben der Klimaanlageninnenraumeinheit mit der abgetasteten Drehzahl $F_s$ und Sammeln einer tatsächlichen Leistung $W_s'$ der Klimaanlageninnenraumeinheit in Echtzeit, wenn sie mit der abgetasteten Drehzahl $F_s$ betrieben wird;
   einen Berechnungsschritt: Berechnen einer Leistungsabweichungsrate $e$ der Klimaanlageninnenraumeinheit auf der Grundlage des abgetasteten Leistungsdatensatzes $W_s$, der in dem Schritt zur Erfassung des abgetasteten Leistungsdatensatzes $W_s$ erfasst wurde, und der tatsächlichen Leistung $W_s'$, die in dem Schritt der Erfassung der tatsächlichen Leistung erfasst wurde; wobei,

   $$e = \frac{W_s - W_s'}{W_s} * 100\%$$

   einen Vergleichsschritt: Erfassen einer minimalen Leistungsabweichungsrate $e_{min}$ durch Vergleich auf der Grundlage des Berechnungsergebnisses des Berechnungsschritts; und
   einen Schritt zur Bestimmung der Drehzahl: Bestimmen eines tatsächlichen statischen Druckwerts der Klimaanlageninnenraumeinheit in dem Schritt zur Erfassung der tatsächlichen Leistung auf der Grundlage der minimalen Leistungsabweichungsrate $e_{min}$ und der dieser entsprechenden abgetasteten Leistung, und auf der Grundlage der Entsprechung zwischen den verschiedenen statischen Druckintervallen und der voreingestellten Drehzahl $F_x$ in dem

   Voreinstellungsschritt Bestimmen der voreingestellten Drehzahl $F_x$, die dem tatsächlichen statischen Druckwert entspricht, als die endgültige identifizierte Drehzahl der Klimaanlageninnenraumeinheit.

2. Verfahren zur Steuerung der Luftmengenkorrektur für eine Klimaanlageninnenraumeinheit nach Anspruch 1, ferner umfassend vor dem Voreinstellungsschritt einen Schritt zur Erfassung der voreingestellten Drehzahl: Messen der entsprechenden Drehzahlen der Klimaanlageninnenraumeinheit, wenn sie unter der Bedingung der konstanten Luftmenge und jeweils in verschiedenen statischen Druckintervallen betrieben wird; wobei in dem Voreinstellschritt die voreingestellte Drehzahl $F_x$ auf der Grundlage des Erfassungsergebnisses des Schritts zur Erfassung der voreingestellten Drehzahl eingestellt wird.

3. Verfahren zur Steuerung der Luftmengenkorrektur für eine Klimaanlageninnenraumeinheit nach Anspruch 2, wobei in dem Schritt zur Erfassung der voreingestellten Drehzahl die Daten des statischen Drucks unter Verwendung eines Messgeräts für den statischen Druck gemessen und erfasst werden.

4. Verfahren zur Steuerung der Luftmengenkorrektur für eine Klimaanlageninnenraumeinheit nach einem der vorhergehenden Ansprüche, wobei der Schritt zur tatsächlichen Leistungserfassung durchgeführt wird, nachdem die Klimaanlageninnenraumeinheit in eine automatische Identifikationsfunktion eintritt.

5. Verfahren zur Steuerung der Luftmengenkorrektur für eine Klimaanlageninnenraumeinheit nach einem der vorhergehenden Ansprüche, wobei in dem Berechnungsschritt jede abgetastete Leistung in dem abgetasteten Leistungsdatensatz $W_s$ jeweils mit der tatsächlichen Leistung verglichen wird, um die Leistungsabweichungsrate $e$ zu berechnen.

6. Verfahren zur Steuerung der Luftmengenkorrektur für eine Klimaanlageninnenraumeinheit nach einem der vorhergehenden Ansprüche, wobei in dem Voreinstellschritt der numerische Bereich der verschiedenen statischen Druckintervalle 0-200 Pa beträgt.

7. Verfahren zur Steuerung der Luftmengenkorrektur für eine Klimaanlageninnenraumeinheit nach einem der vorhergehenden Ansprüche, wobei in dem Voreinstellschritt die Zahl der voreingestellten Drehzahlen mindestens 10 beträgt.

8. Verfahren zur Steuerung der Luftmengenkorrektur für eine Klimaanlageninnenraumeinheit nach einem der vorhergehenden Ansprüche, wobei sich die abgetastete Drehzahl Fs von der voreingestellten Drehzahl unterscheidet.

9. Vorrichtung zur Steuerung der Luftmengenkorrektur für eine Klimaanlageninnenraumeinheit, umfassend:

ein Voreinstellungsmodul (1), das dazu konfiguriert ist, eine entsprechende Drehzahl der Klimaanlageninnenraumeinheit, wenn sie mit einem konstanten Luftvolumen und jeweils in verschiedenen statischen Druckintervallen betrieben wird, voreinzustellen und diese als eine voreingestellte Drehzahl $F_x$ aufzuzeichnen;

ein Modul zur Erfassung eines abgetasteten Leistungsdatensatzes $W_s$ (2), das dazu konfiguriert ist, eine abgetastete Drehzahl $F_s$ einzustellen, entsprechende abgetastete Leistungen der Klimaanlageninnenraumeinheit, wenn sie in den verschiedenen statischen Druckintervallen jeweils mit der abgetasteten Drehzahl $F_s$ und unter der Bedingung des konstanten Luftvolumens betrieben wird, zu sammeln und diese als den abgetasteten Leistungsdatensatz $W_s$ aufzuzeichnen;

ein Modul zur Erfassung einer tatsächlichen Leistung (3), das dazu konfiguriert ist, die Klimaanlageninnenraumeinheit mit der abgetasteten Drehzahl $F_s$ zu betreiben und eine tatsächliche Leistung $W_s$' der Klimaanlageninnenraumeinheit in Echtzeit zu sammeln, wenn sie mit der abgetasteten Drehzahl $F_s$ betrieben wird;

ein Berechnungsmodul (4), das kommunikativ mit dem Modul zur Erfassung des abgetasteten Leistungsdatensatzes $W_s$ und dem Modul zur Erfassung der tatsächlichen Leistung verbunden und dazu konfiguriert ist, eine Leistungsabweichungsrate $e$ der Klimaanlageninnenraumeinheit auf der Grundlage des abgetasteten Leistungsdatensatzes $W_s$, der von dem Modul zur Erfassung des abgetasteten Leistungsdatensatzes $W_s$ erfasst wurde, und der tatsächlichen Leistung $W_s$', die von dem Modul zur Erfassung der tatsächlichen Leistung erfasst wurde, zu berechnen; wobei,

$$e = \frac{Ws - Ws'}{Ws} * 100\%$$

ein Vergleichsmodul (5), das kommunikativ mit dem Berechnungsmodul verbunden und dazu konfiguriert ist, eine minimale Leistungsabweichungsratee$_{min}$ durch Vergleich auf der Grundlage des Berechnungsergebnisses des Berechnungsmoduls zu ermitteln; und
ein Modul zur Bestimmung der Drehzahl (6), das kommunikativ mit dem Voreinstellungsmodul und dem Vergleichsmodul verbunden und dazu konfiguriert ist, einen tatsächlichen statischen Druckwert der Klimaanlageninnenraumeinheit in dem Modul zur Erfassung der tatsächlichen Leistung auf der Grundlage der minimalen Leistungsabweichungsrate $e_{min}$ und der dieser entsprechenden abgetasteten Leistung zu bestimmen, und auf der Grundlage der Entsprechung zwischen den verschiedenen statischen Druckintervallen und der voreingestellten Drehzahl $F_x$ in dem Voreinstellungsmodul die voreingestellte Drehzahl $F_x$, die dem tatsächlichen statischen Druckwert entspricht, als die endgültige identifizierte Drehzahl der Klimaanlageninnenraumeinheit zu bestimmen.

10. Multisplit-Klimaanlageneinheit, umfassend die Vorrichtung zur Steuerung der Luftmengenkorrektur für eine Klimaanlageninnenraumeinheit nach Anspruch 9.

**Revendications**

1. Procédé de commande de correction de volume d'air pour une unité intérieure de climatiseur, comprenant les étapes suivantes :

une étape de préréglage : préréglage d'une vitesse de rotation correspondante de l'unité intérieure de climatiseur lors du fonctionnement à un volume d'air constant et dans différents intervalles de pression statique respectivement, et enregistrement de celle-ci en tant que vitesse de rotation préréglée $F_x$ ;

une étape d'acquisition d'ensemble de données de puissances échantillonnées $W_s$: réglage d'une vitesse de rotation échantillonnée $F_s$, collecte de puissances échantillonnées correspondantes de l'unité intérieure de climatiseur lors du fonctionnement dans les différents intervalles de pression statique respectivement à la vitesse de rotation échantillonnée $F_s$ et dans la condition du volume d'air constant, et enregistrement de ceux-ci comme l'ensemble de données de puissances échantillonnées $W_s$ ;

une étape d'acquisition de puissance réelle : fonctionnement de l'unité intérieure de climatiseur à la vitesse de rotation échantillonnée $F_s$, et collecte en temps réel d'une puissance réelle $W_s$' de l'unité intérieure de climatiseur lors du fonctionnement à la vitesse de rotation échantillonnée $F_s$ ;

une étape de calcul : calcul d'un taux d'écart de puissance $e$ de l'unité intérieure de climatiseur sur la base de l'ensemble de données de puissances échantillonnées $W_s$ acquis dans l'étape d'acquisition d'ensemble de données de puissances échantillonnées $W_s$ et de la puissance

réelle $W_s$' acquise dans l'étape d'acquisition de puissance réelle ; où,

$$e = \frac{Ws - Ws'}{Ws} * 100\%$$

une étape de comparaison : acquisition d'un taux d'écart de puissance minimal $e_{min}$ par comparaison basée sur le résultat de calcul de l'étape de calcul ; et
une étape de détermination de vitesse de rotation : détermination d'une valeur de pression statique réelle de l'unité intérieure de climatiseur dans l'étape d'acquisition de puissance réelle sur la base du taux d'écart de puissance minimal $e_{min}$ et de la puissance échantillonnée correspondant à celui-ci, et sur la base de la correspondance entre les différents intervalles de pression statique et la vitesse de rotation préréglée $F_x$ dans l'étape de préréglage, détermination de la vitesse de rotation préréglée $F_x$ correspondant à la valeur de pression statique réelle comme la vitesse de rotation identifiée finale de l'unité intérieure de climatiseur.

2. Procédé de commande de correction de volume d'air pour une unité intérieure de climatiseur selon la revendication 1, comprenant également, avant l'étape de préréglage, une étape d'acquisition de vitesse de rotation préréglée : mesure des vitesses de rotation correspondantes de l'unité intérieure de climatiseur lors du fonctionnement dans la condition du volume d'air constant et dans différents intervalles de pression statique respectivement ; où dans l'étape de préréglage, la vitesse de rotation préréglée $F_x$ est réglée sur la base du résultat de l'étape d'acquisition de vitesse de rotation préréglée.

3. Procédé de commande de correction de volume d'air pour une unité intérieure de climatiseur selon la revendication 2, dans lequel, dans l'étape d'acquisition de vitesse de rotation préréglée, des données de pression statique sont mesurées et acquises en utilisant un manomètre statique.

4. Procédé de commande de correction de volume d'air pour une unité intérieure de climatiseur selon une quelconque revendication précédente, dans lequel l'étape d'acquisition de puissance réelle est réalisée après que l'unité intérieure de climatiseur entre dans une fonction d'identification automatique.

5. Procédé de commande de correction de volume d'air pour une unité intérieure de climatiseur selon une quelconque revendication précédente, dans lequel, dans l'étape de calcul, chaque puissance échantillonnée dans l'ensemble de données de puissances

échantillonnées $W_s$ est comparée à la puissance réelle respectivement pour calculer le taux d'écart de puissance $e$.

6. Procédé de commande de correction de volume d'air pour une unité intérieure de climatiseur selon une quelconque revendication précédente, dans lequel, dans l'étape de préréglage, la plage numérique des différents intervalles de pression statique est de 0 à 200 Pa.

7. Procédé de commande de correction de volume d'air pour une unité intérieure de climatiseur selon une quelconque revendication précédente, dans lequel, dans l'étape de préréglage, le nombre des vitesses de rotation préréglées n'est pas inférieur à 10.

8. Procédé de commande de correction de volume d'air pour une unité intérieure de climatiseur selon une quelconque revendication précédente, dans lequel la vitesse de rotation échantillonnée Fs est différente de la vitesse de rotation préréglée.

9. Dispositif de commande de correction de volume d'air pour une unité intérieure de climatiseur, comprenant :

un module de préréglage (1) configuré pour prérégler une vitesse de rotation correspondante de l'unité intérieure de climatiseur lors du fonctionnement à un volume d'air constant et dans différents intervalles de pression statique respectivement, et enregistrer celle-ci en tant que vitesse de rotation préréglée $F_x$ ;
un module d'acquisition d'ensemble de données de puissances échantillonnées $W_s$ (2) configuré pour régler une vitesse de rotation échantillonnée $F_s$, collecter des puissances échantillonnées correspondantes de l'unité intérieure de climatiseur lors du fonctionnement dans les différents intervalles de pression statique respectivement à la vitesse de rotation échantillonnée $F_s$ et dans la condition du volume d'air constant, et enregistrer ceux-ci comme l'ensemble de données de puissances échantillonnées $W_s$ ;
un module d'acquisition de puissance réelle (3) configuré pour faire fonctionner l'unité intérieure de climatiseur à la vitesse de rotation échantillonnée $F_s$, et collecter une puissance réelle $W_s$' de l'unité intérieure de climatiseur lors du fonctionnement à la vitesse de rotation échantillonnée $F_s$ ;
un module de calcul (4) connecté en communication avec le module d'acquisition d'ensemble de données de puissances échantillonnées $W_s$ et le module d'acquisition de puissance réelle et configuré pour calculer un taux d'écart de puissance *e* de l'unité intérieure de climatiseur sur la base de l'ensemble de données de puissances échantillonnées $W_s$ acquis par le module d'acquisition d'ensemble de données de puissances échantillonnées $W_s$ et de la puissance réelle $W_s'$ acquise par le module d'acquisition de puissance réelle ; où,

$$e = \frac{Ws - Ws'}{Ws} * 100\%$$

un module de comparaison (5) connecté en communication avec le module de calcul et configuré pour acquérir un taux d'écart de puissance minimal $e_{min}$ par comparaison basée sur le résultat de calcul du module de calcul ; et un module de détermination de vitesse de rotation (6) connecté en communication avec le module de préréglage et le module de comparaison et configuré pour déterminer une valeur de pression statique réelle de l'unité intérieure de climatiseur dans le module d'acquisition de puissance réelle sur la base du taux d'écart de puissance minimal $e_{min}$ et de la puissance échantillonnée correspondant à celui-ci, et sur la base de la correspondance entre les différents intervalles de pression statique et la vitesse de rotation préréglée $F_x$ dans le module de préréglage, déterminer la vitesse de rotation préréglée $F_x$ correspondant à la valeur de pression statique réelle comme la vitesse de rotation identifiée finale de l'unité intérieure de climatiseur.

10. Unité de climatisation multi-split, comprenant le dispositif de commande de correction de volume d'air pour une unité intérieure de climatiseur selon la revendication 9.

Presetting step: preset a corresponding rotation speed of the air conditioner indoor unit when operating at a constant air volume and in different static pressure intervals respectively, and record it as a preset rotation speed $F_x$

Sampled power data set $W_s$ acquisition step: set a sampled rotation speed $F_s$, collect corresponding sampled powers of the air conditioner indoor unit when operating in the different static pressure intervals respectively at the sampled rotation speed $F_s$ and in the condition of the constant air volume, and record them as the sampled power data set $W_s$

Actual power acquisition step: operate the air conditioner indoor unit at the sampled rotation speed $F_s$, and collect in real time an actual power $W_s'$ of the air conditioner indoor unit when operating at the sampled rotation speed $F_s$

Computation step: calculate the power deviation rate $e$ of the fan coil based on the sampled power data set $W_s$ and the actual power $W_s'$

Comparison step: acquire a minimum power deviation rate $e_{min}$ through comparison based on the computation result of the computation step

Determine an actual static pressure value of the air conditioner indoor unit in the actual power acquisition step based on the minimum power deviation rate $e_{min}$ and the sampled power corresponding thereto

Based on the correspondence between the different static pressure intervals and the preset rotation speed $F_x$ in the presetting step, determine the preset rotation speed $F_x$ corresponding to the actual static pressure value as the final identified rotation speed of the air conditioner indoor unit

Operate the air conditioner indoor unit at the final identified rotation speed

# FIG. 1

```
┌─────────────────────────────┐      ┌─────────────────────────┐
│ Sampled power data set Ws    │      │ Actual power acquisition │
│      acquisition module      │      │         module           │
│             2                │      │            3             │
└─────────────────────────────┘      └─────────────────────────┘

┌─────────────────────────┐      ┌─────────────────────────┐
│  Preset rotation speed   │      │  Computation module      │
│    acquisition module    │      │                          │
│            7             │      │            4             │
└─────────────────────────┘      └─────────────────────────┘

┌─────────────────────────┐      ┌─────────────────────────┐
│   Presetting module      │      │   Comparison module      │
│            1             │      │            5             │
└─────────────────────────┘      └─────────────────────────┘

              ┌─────────────────────────┐
              │     Rotation speed       │
              │  determination module    │
              │            6             │
              └─────────────────────────┘
```

**FIG. 2**

**FIG. 3**

**EP 4 438 967 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113108443 A